# EUROPEAN PATENT SPECIFICATION

(11) **EP 3 308 980 B1**
(45) Date of publication and mention of the grant of the patent: **07.08.2019**
(21) Application number: 16807226.2
(22) Date of filing: 27.04.2016
(51) Int. Cl.: B60C 11/12, B60C 11/03

(54) **TIRE**
REIFEN
PNEU

(30) Priority: 12.06.2015 JP 2015119292
(43) Date of publication of application: 18.04.2018
(73) Proprietor: Bridgestone Corporation, Tokyo 104-8340 (JP)
(72) Inventor: HAYASHI, Shintaro, Tokyo 104-8340 (JP)
(74) Representative: Oxley, Robin John George
(86) International application number: PCT/JP2016/063259
(87) International publication number: WO 2016/199519

(56) References cited:
- EP-A2- 0 844 107
- WO-A1-2012/043036
- WO-A1-2012/043668
- WO-A1-2012/127332
- JP-A- H1 024 705
- JP-A- H1 024 705
- JP-A- H04 310 408
- JP-A- H10 151 915
- JP-A- 2013 043 580
- JP-A- 2013 519 560
- JP-A- 2015 140 047
- US-A1- 2008 053 585
- US-A1- 2010 200 138

## Description

### Technical Field

An embodiment of the present invention relates to a tire.

### Background Art

A tire having, at the tread portion, lengthwise grooves (main grooves) that extend in the tire circumferential direction, land portions that are sectioned by the lengthwise grooves, and lateral grooves that are formed in the land portions and extend in directions intersecting the lengthwise grooves, is disclosed in Japanese Patent Application Laid-Open (JP-A) No. 2012-116306. The direction of mounting this tire to a vehicle is specified, and the tread pattern thereof is asymmetrical to the left and the right. The water film that is between the tread surface of the tread portion and the road surface on a wet road surface can be discharged-out to the main grooves through the lateral grooves. Attention is also drawn to the disclosures of EP0844107, according to the preamble of claim 1, WO2012/127332 and WO2012/043036.

### SUMMARY OF INVENTION

### Technical Problem

However, in the case of a structure in which the lateral grooves extend in directions intersecting the main grooves and communicate with the main grooves, acute angle portions are formed at the land portions at the regions where the lateral grooves and the main grooves intersect, as seen in a tread plan view. When these acute angle portions are caught-in between the road surface and the tread surface of the tread at the time of cornering for example, this leads to a deterioration in the ground contacting ability and is not preferable from the standpoint of handling stability.

On the other hand in order to make it such that acute angle portions are not formed at the regions of the land portions where the main grooves and the lateral grooves intersect, it has been though to provide chamfered portions at the land portion ends that are at the tread surface sides of the lateral grooves. However, merely making the chamfered portions large leads to an deterioration in the ground contacting ability due to the decrease in the ground contact surface area of the tread.

An object of an embodiment of the present invention is to, in a tire, improve the handling stability particularly at the time of cornering while maintaining the water film eliminating performance, by suppressing catching-in, between the road surface and the tread surface of the tread, of the land portion ends that are at the tread surface side.

### Solution to Problem

A tire relating to a first aspect of the present invention is provided as claimed in claim 1.

At this tire, because the sipes communicate with the main grooves, it is easy for the sipes to open at the time when the tread surface of the tread contacts the ground. Therefore, the water film eliminating performance between the road surface and the tread surface of the tread is maintained. Further, the convex directions, as seen from the tread surface, of the two arc-shaped sipe portions are directions opposite to one another in the tire circumferential direction, and these convex directions are directed toward the tire transverse direction central side of the land portion. Therefore, at the portion where the main groove and the sipe communicate, the angle that is formed by the main groove and the sipe can be made to be larger than in a case in which the sipe is rectilinear. In other words, even if the average angles of sipes with respect to the tire circumferential direction are the same, the angle, with respect to the tire circumferential direction, of the sipe portion that communicates with the main groove can be made to be larger than in a case in which the sipe is rectilinear. Therefore, at the time when the tire rotates, the land portion ends at the tread surface sides of the sipes being caught-in between the road surface (not illustrated) and the tread surface of the tread is suppressed.

In a second aspect of the present invention, in the tire relating to the first aspect, a width in the tire circumferential direction of the chamfered portions gradually decreases from a tire transverse direction outer side toward an inner side of the land portions.

In this tire, the width in the tire circumferential direction of the chamfered portions gradually decrease from the tire transverse direction outer side toward the inner side of the land portions. Therefore, a reduction in the ground contact surface area of the tire transverse direction central portion, which has relatively high rigidity, of the land portion is suppressed.

In a third aspect of the present invention, in the tire relating to the first aspect or the second aspect, at the chamfered portions, as seen from the tread surface, a chamfered amount of a corner portion at an acute angle side, at which the sipes and the main grooves intersect at an acute angle, is greater than a chamfered amount at a corner portion at an obtuse angle side, at which the sipes and the main grooves intersect at an obtuse angle.

In this tire, the chamfered amount of the corner portion at the acute angle side at the chamfered portion is greater than the chamfered amount of the corner portion at the obtuse angle side. Therefore, the corner portions being caught-in between the road surface and the tread surface of the tread is suppressed. Accordingly, the handling stability can be improved while the water film eliminating performance is maintained.

In a fourth aspect of the present invention, in the tire relating to any one aspect of the first through third aspects, in a tire circumferential direction cross-section, the chamfered portions are formed in a curved shape that is convex.

In this tire, in a tire circumferential direction cross-section, the chamfered portions are curved shapes that are convex. Therefore, the volume of the land portion is greater than in a case in which the chamfered portion is rectilinear. Thus, a decrease in the rigidity of the land portion is suppressed, and the handling stability can be improved.

In a fifth aspect of the present invention, in the tire relating to any one aspect of the first through fourth aspects, in a tire radial direction, a depth of the chamfered portions from the tread surface is 10 to 40% of a depth of the sipes from the tread surface.

If the depth of the chamfered portion falls outside of this range, the effect of suppressing catching-in, between the road surface and the tread surface of the tread, of the land portion ends at the tread surface side deteriorates, and this leads to a decrease in rigidity due to the reduction in the volume of the land portion.
In this tire, because the depth of the chamfered portion is set appropriately, the water film eliminating performance and the rigidity of the land portions can be ensured in a well-balanced manner.

### Advantageous Effects of Invention

In accordance with the tire relating to an embodiment of the present invention, there is the excellent effect that, by suppressing catching-in, between the road surface and the tread surface of the tread of the land portions ends at the tread surface side of the tire, the handling stability at the time of cornering in particular can be improved while the water film eliminating performance is maintained.

### BRIEF DESCRIPTION OF DRAWINGS

Fig. 1 is a plan view showing a tread pattern of a tire relating to a present embodiment.
Fig. 2 is an enlarged plan view showing a sipe and chamfered portions that are provided at a land portion at a tread.
Fig. 3 is an enlarged perspective view showing the sipe and the chamfered portions that are provided at the land portion.
Fig. 4 is an enlarged side view showing the sipe and the chamfered portions that are provided at the land portion.

### DESCRIPTION OF EMBODIMENTS

A form for embodying the present invention is described hereinafter on the basis of the drawings. In the drawings, the arrow C direction indicates the tire circumferential direction, the arrow R direction indicates the tire radial direction, and the arrow W direction indicates the tire transverse direction. The tire radial direction means the direction orthogonal to the tire rotational axis (not illustrated). The tire transverse direction means the direction parallel to the tire rotational axis. The tire transverse direction can also be called the tire axial direction. Further, OUT means the vehicle-mounted outer side, and IN means the vehicle-mounted inner side.

T means the ground contacting ends. The ground contacting ends are the end portions at the tire transverse direction outermost sides at the ground contacting regions at the time when the tire is mounted to a standard rim prescribed in the JATMA YEAR BOOK (2015 edition, the Japan Automobile Tyre Manufacturers Association standards), and is filled to an internal pressure of 100% of the air pressure (the maximum air pressure) that corresponds to the maximum load capacity (the load that is in bold type in the internal pressure - load capacity table of correspondence) at the applicable size / ply rating in the JATMA YEAR BOOK, and the tire bears a load of 70% of the load index. When TRA standards or ETRTO standards are applied, the usage area and manufacturing area follow those respective standards.

Further, dimension measuring methods of the respective portions are in accordance with the methods described in the 2015 edition of the YEAR BOOK issued by JATMA (Japan Automobile Tyre Manufacturers Association).

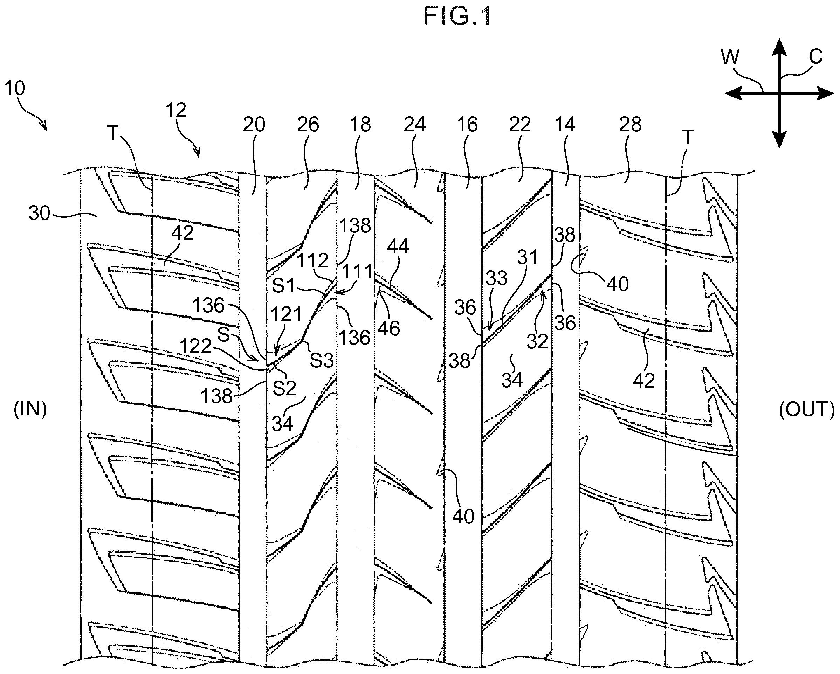

In Fig. 1, a tire 10 relating to the present embodiment relates to a pneumatic tire for example, and has, at a tread 12, four main grooves 14, 16, 18, 20 that are a row of plural main grooves, and an outer side intermediate land portion 22, a central land portion 24, an inner side intermediate land portion 26, an outer side shoulder land portion 28 and an inner side shoulder land portion 30 that are a row of land portions, and sipes S, and chamfered portions 32,33.

The main grooves 14, 16, 18, 20 are provided in that order from the vehicle-mounted outer side toward the inner side, and respectively extend in the tire circumferential direction. The groove widths of the two main grooves 16, 18 that are positioned at the tire transverse direction central side are set to be larger than the groove widths of the two main grooves 14, 20 that are positioned at the tire transverse direction outer sides.

The outer side intermediate land portion 22, the central land portion 24, the inner side intermediate land portion 26, the outer side shoulder land portion 28, and the inner side shoulder land portion 30 are demarcated in the tire transverse direction by the main grooves 14, 16, 18, 20, respectively. Concretely, the outer side intermediate land portion 22 is demarcated by the main grooves 14, 16. The central land portion 24 is demarcated by the main grooves 16, 18, and the inner side intermediate land portion 26 is demarcated by the main grooves 18, 20. Further, the outer side shoulder land portion 28 is demarcated by the main groove 14 and is positioned at the tire transverse direction outer side of the main groove 14, i.e., at the end portion at the vehicle-mounted outer side of the tread 12. Further, the inner side shoulder land portion 30 is demarcated by the main groove 20 and is positioned at the tire transverse direction outer side of the main groove 20, i.e., the end portion at the vehicle-mounted inner side of the tread 12.

In Fig. 1 through Fig. 4, the sipes S have two sipe portions S1, S2 that are arc-shaped. The sipe portions S1, S2 communicate with a tread surface 34 side of the inner side intermediate land portion 26. The convex directions of the sipe portions S1, S2 as seen from the tread surface 34 are directions that are opposite to one another in the tire circumferential direction, and the convex directions face the tire transverse direction central side of the inner side intermediate land portion 26. In other words, the center of curvature of the sipe portion S1 that is arc-shaped, and the center of curvature of the sipe portion S2 that is arc-shaped, are at opposite sides with respect to the sipe S. The sipe portion S1 communicates with the main groove 18, and the sipe portion S2 communicate with the main groove 20. This sipe S is a narrow groove of a width of, for example, 1.2 mm or less, that closes at the time when the inner side intermediate land portion 26 contacts the ground, and has a shape that is cut-in from the tread surface 34 side toward the tire radial direction inner side. The depth of the sipe S from the tread surface 34 is set to be more shallow than the depths of the main grooves 18, 20 from that same tread surface 34. On the whole, the sipe S extends in a direction that is inclined with respect to the tire transverse direction, and the inner side intermediate land portion 26 is demarcated in the tire circumferential direction by the sipes S.

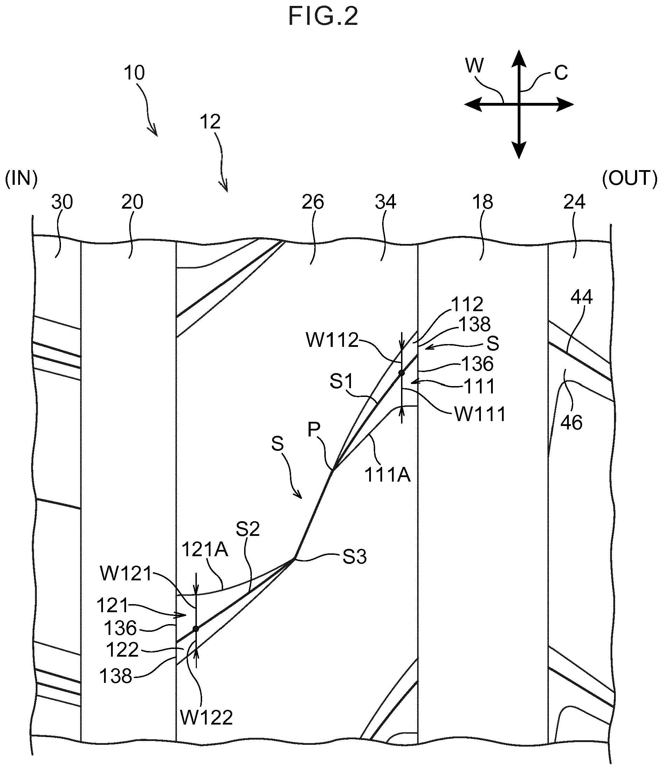

As shown in Fig. 2, the sipe S is a shape that is bent at an obtuse angle at boundary S3 of the sipe portions S1, S2. The sipe portion S1 is positioned at the main groove 18 side, i.e., the vehicle-mounted outer side, of the boundary S3, and the sipe portion S2 is positioned at the main groove 20 side, i.e., the vehicle-mounted inner side, of the boundary S3. The boundary S3 is positioned, for example, at the substantially central portion in the tire transverse direction of the inner side intermediate land portion 26.

The radii of curvature of the sipe portions S1, S2 that are arc-shaped are not limited to being constant, and may respectively be varied appropriately.

In Fig. 2, chamfered portions 111, 112, 121, 122 are provided respectively at the land portion ends that are at the tread surface 34 side and that run along the sipe S. Concretely, chamfered portions 111, 112 corresponds to the sipe portion S1, and chamfered portions 121, 122 corresponds to the sipe portion S2. Widths W111, W112 in the tire circumferential direction of the chamfered portions 111, 112 respectively decrease gradually from the tire transverse direction outer side toward the inner side of the inner side intermediate land portion 26, and, for example, respectively become 0 at a same tire transverse direction position P before reaching the boundary S3. Namely, chamfering is not carried out from the boundary S3 to the position P at the sipe S. Widths W121, W122 in the tire transverse direction of the chamfered portions 121, 122 as well respectively decrease gradually from the tire transverse direction outer side toward the inner side of the inner side intermediate land portion 26, and, for example, respectively become 0 at the position of reaching the boundary S3.

As seen from the tread surface 34, the chamfered portion 111 is positioned at a corner portion 136 at the acute angle side at which the sipe portion S1 (the sipe S) and the main groove 18 intersect at an acute angle. On the other hand, as seen from the tread surface 34, the chamfered portion 112 is positioned at a corner portion 138 at the obtuse angle side at which the sipe portion S1 (the sipe S) and the main groove 18 intersect at an obtuse angle. With regard to the chamfered portions 121, 122 that correspond to the sipe S2, the chamfered portion 121 is positioned at the corner portion 136 at the acute angle side, and the chamfered portion 122 is positioned at the corner portion 138 at the obtuse angle side.

At both of the sipe portions S1, S2, the chamfered amount of the corner portion 136 at the acute angle side is greater than the chamfered amount at the corner portion 138 at the obtuse angle side. The chamfered amounts of the chamfered portions 111, 112 corresponding to the sipe portion S1 respectively decrease gradually from the tire transverse direction outer side toward the inner side of the corner portion 136 side at the acute angle side. Further, the chamfered amounts of the chamfered portions 121, 122 corresponding to the sipe portion S2 also respectively decrease gradually from the tire transverse direction outer side toward the inner side of the corner portion 136 side at the acute angle side.

Here, chamfered amount means the volume of the portion that is chamfered. To describe this by using the chamfered portion 111 as an example, the depth of the chamfered portion 111 is constant for example, and the greater the width W111 in the tire circumferential direction of the chamfered portion 111 as seen from the tread surface 34, the greater the chamfered amount. Accordingly, the magnitude of the chamfered amount can be compared on the basis of the magnitude of the width W111. Accompanying this, chamfering starting portion 111A, which is the boundary between the tread surface 34 and the chamfered portion 111, is a curved shape that is convex toward the chamfered portion 111 side as seen from the tread surface 34. Note that the width W111 of the chamfered portion 111 is the distance, in the tire circumferential direction, from the chamfering starting portion 111A to the wall portion, which is at the side where the chamfered portion 111 is positioned, at the sipe portion S1. Similarly, a chamfering starting portion 121A, which is the boundary between the tread surface 34 and the chamfered portion 121, also is a curved shape that is convex toward the chamfered portion 121 side as seen from the tread surface 34.

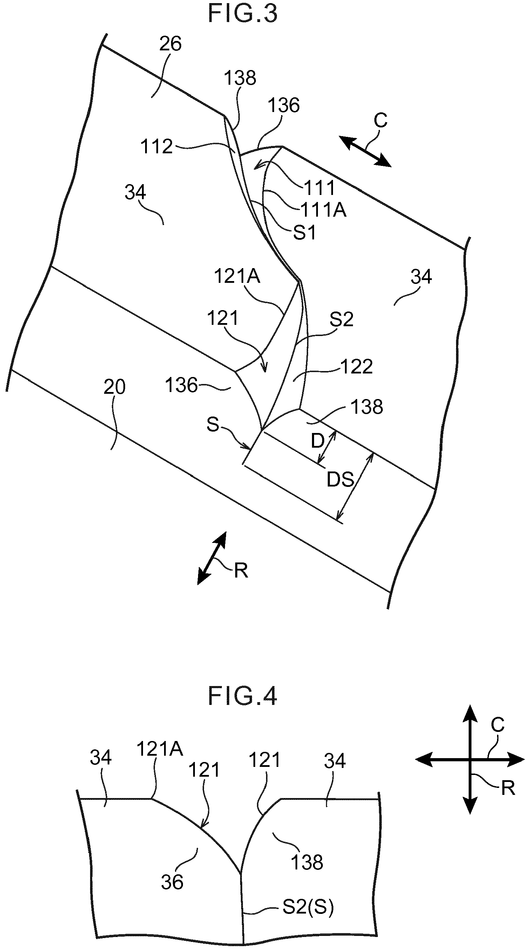

As shown in Fig. 3, in the tire radial direction, depth D of the chamfered portions 121, 122 from the tread surface 34 is 10 to 40% of depth DS of the sipe S from the tread surface 34. The same holds for the chamfered portions 111, 112 as well. This is because, if the depth D of the chamfered portions 121, 122 falls outside of this range, the effect of suppressing catching-in, between the road surface and the tread surface of the tread, of the land portion ends at the tread surface side deteriorates, and this leads to a reduction in rigidity that is due to a decrease in the volume of the inner side intermediate land portion 26.

In a tire circumferential direction cross-section, the chamfered portions 121, 122 are, for example, curved shapes that are shapes convex toward the tread surface 34 side, respectively. Concretely, the chamfered portion 121 is formed in a shape convex toward at the tread surface 34 side and the chamfered portion 122 side. Further, the chamfered portion 122 is formed in a shape convex toward the tread surface 34 side and the chamfered portion 121 side. Fig. 4 is a side view, and they are equivalent to the cross-sectional shapes of the tire transverse direction end portions of the outer side intermediate land portion 22. In this drawing, the radius of curvature of the chamfered portion 121, which is positioned at the corner portion 136 at the acute angle side, is greater than that of the chamfered portion 122 that is positioned at the corner portion 138 at the obtuse angle side, but the magnitudes of the radii of curvature are not limited to this. For example, by making the cross-sectional shape of the chamfered portion 122 approach rectilinear, the radius of curvature thereof can be made to be larger than that of the chamfered portion 121. The radii of curvature are not limited to being constant, and may be varied in accordance with the position. The same holds for the chamfered portions 111, 112 as well.

In addition, in Fig. 1, sipes 31 are provided at the outer side intermediate land portion 22. The sipes 31 communicate with the tread surface 34 side, and are formed so as to communicate with the main grooves 14, 16. The sipes 31 extend in a direction that is inclined with respect to the tire transverse direction. The outer side intermediate land portion 22 is demarcated in the tire circumferential direction by these sipes 31. The shape of the sipe 31 as seen from the tread surface 34 is a substantially rectilinear shape or is a curved shape that is convex toward one side in the tire circumferential direction.

The chamfered portions 32, 33 are respectively provided at the land portion ends that are at the tread surface 34 side and that run along the sipes 31. The width in the tire circumferential direction of the chamfered portions 32, 33 gradually decreases from the tire transverse direction outer side toward the inner side of the outer side intermediate land portion 22. As an example, at the one chamfered portion 32, as seen from the tread surface 34, the chamfered amount of a corner portion 36 at the acute angle side, at which the sipe 31 and the main groove 14 intersect at an acute angle, is larger than the chamfered amount of a corner portion 38 at the obtuse angle side at which the sipe 31 and the main groove 16 intersect at an obtuse angle. The same holds for the other chamfered portion 33 as well.

Namely, in the illustrated example, at the land portion end that is at a tire circumferential direction one side with respect to the sipe 31, the chamfered amount of the chamfered portion 32 decreases gradually from the tire transverse direction outer side toward the inner side of the corner portion 36 side at the acute angle side. The depth of the chamfered portion 32 is constant for example, and, the greater the width in the tire circumferential direction of the chamfered portion 32 as seen from the tread surface 34, the greater the chamfered amount. Accordingly, the magnitude of the chamfered amount can be compared on the basis of the magnitude of the width.

At the chamfered portion 32, the chamfered amount at the corner portion 38 side at the obtuse angle side is, for example, constant, or increases slightly or decreases slightly, from the tire transverse direction central portion of the outer side intermediate land portion 22 to the end portion at the main groove 16 side. On the other hand, at the land portion end that is at the tire circumferential direction other side with respect to the sipe 31, the chamfered amount of the chamfered portion 33 gradually decreases from the corner portion 36 side at the acute angle side toward the corner portion 38 side at the obtuse angle side. In a tire circumferential direction cross-section, the chamfered portions 32, 33 respectively are curved shapes that are convex (not illustrated).

Note that the corner portion 36 at the acute angle side and the corner portion 38 at the obtuse angle side not only exist at the tire transverse direction one side and other side of the land portion end, but also exist adjacent to one another at the tire circumferential direction one side and other side which sandwich the sipe 31 therebetween.

In Fig. 1, cut-out portions 40 are respectively formed at the outer side shoulder land portion 28 and the central land portion 24 on extensions of the sipes 31. Further, lateral grooves 42 that extend in the tire transverse direction are respectively formed in the outer side shoulder land portion 28 and the inner side shoulder land portion 30.

Sipes 44 are formed in the central land portion 24. These sipes 44 do not communicate with the main groove 16, and communicate only with the main groove 18. Chamfered portions 46 are provided at the land portion ends at the tread surface 34 side of the sipes 44.

### (Operation)

The present embodiment is structured as described above, and operation thereof is as follows. In Fig. 1 through Fig. 4, in the tire 10 relating to the present embodiment, the sipe S has the two sipe portions S1, S2 that are arc-shaped, and the chamfered portions 111, 112, 121, 122 are provided at the land portion ends that are at the tread surface 34 side and that run along the sipes S. Because the sipes S communicate with the main grooves 18, 20, the sipes S open easily at the time when the tread surface 34 of the tread 12 contacts the ground. Therefore, the performance of eliminating the water film between the road surface and the tread surface 34 is maintained.

Further, at the two arc-shaped sipe portions S1, S2 at the sipe S, the convex directions thereof as seen from the road surface 34 are directions that are opposite to one another in the tire circumferential direction, and these convex directions are oriented toward the tire transverse direction central side of the inner side intermediate land portion 26. Due thereto, at the portions where the main grooves 18, 20 and the sipes S communicate, the angles formed by the main grooves and the sipes can be made to be larger than in a case in which the sipes are rectlinear. In other words, even if the average angle of the sipes with respect to the tire circumferential direction is the same, the angle at the acute angle side with respect to the tire circumferential direction of the sipe portion S1 that communicates with the main groove 18 can be made to be larger than in a case in which the sipe portions S1, S2 are straight lines. The same holds as well for the angle at the acute angle side with respect to the tire circumferential direction of the sipe portion S2 that communicates with the main groove 20. Therefore, when the tire rotates, the land portion ends that are at the tread surface 34 sides of the sipes S catching-in between the road surface (not illustrated) and the tread surface 34 of the tread 12 is suppressed.

Further, the sipe S is, on the whole, inclined with respect to the tire transverse direction. Therefore, the chamfered portions 111, 112 and the chamfered portions 121, 122 can be disposed so as to be offset in the tire circumferential direction with the unchamfered region, that is from the boundary S3 to the position P, at the sipe S, and that is sandwiched therebetween. Thus, when the tire rotates, the timings at which the land portion ends, at which the respective chamfered portions exist, contact the ground are offset. Therefore, the quietness improves.

Further, the widths W111, W112, W121, W122 in the tire circumferential direction of the chamfered portions 111, 112, 121, 122 respectively decrease gradually from the tire transverse direction outer side toward the inner side of the inner side intermediate land portion 26. Therefore, a reduction in the ground contact surface area of the tire transverse direction central portion, at which the rigidity is relatively high, of the inner side intermediate land portion 26 is suppressed. Due thereto, the handling stability can be improved.

Moreover, the chamfered amounts of the chamfered portions 111, 121 that are positioned at the corner portions 136 at the acute angle sides are respectively larger than the chamfered amounts of the chamfered portions 112, 122 that are positioned at the corner portions 138 at the obtuse angle sides. Thus, the corner portions 136 at the acute angle sides being caught-in between the road surface and the tread surface 34 of the tread 12 is suppressed. Accordingly, the handling stability can be improved while the water film eliminating performance is maintained.

Further, as seen from the tread surface 34, the chamfering starting portions 111A, 121A of the chamfered portions 111, 121, that are positioned at the corner portion 136 at the acute angle side are respectively made to be curved shapes that are convex at the chamfered portion 111, 121 sides. Therefore, the volume of the inner side intermediate land portion 26 is larger than in a case in which these chamfering starting portions 111A, 121A are rectilinear. Thus, the ground contact surface area of the inner side intermediate land portion 26 can be made to be large, while a decrease in the rigidity of the corner portion 136 is suppressed.

Moreover, in a tire circumferential direction cross-section, the chamfered portions 121, 122 are respectively made to be curved shapes that are convex. Therefore, the volume of the inner side intermediate land portion 26 is larger than a case in which these chamfered portions 121, 122 are rectilinear. Therefore, a decrease in the rigidity of the inner side intermediate land portion 26 is suppressed, and the handling stability can be improved. The same holds for the chamfered portions 111, 112 as well.

Further, the ratio of the depth D of the chamfered portions 121, 122 with respect to the depth of the sipe S is set appropriately. Therefore, a good balance with suppressing the land portion ends at the tread surface side being caught-in between the road surface and the tread surface of the tread, and the rigidity of the inner side intermediate land portion 26, can be ensured. The same holds for the chamfered portions 111, 112 as well.

### [Other Embodiments]

Although an example of an embodiment of the present invention has been described above, embodiments of the present invention are not limited to the above, and, other than the above, can of course be implemented by being modified in various ways within a scope that does not depart from the gist thereof.

The sipe S is structured by the two arc-shaped sipe portions S1, S2. However, the sipe S may further have other sipe portions, such as a rectilinear sipe portion, or a zigzag sipe portion, or the like.

The width W111 in the tire circumferential direction of the chamfered portion 111 gradually decreases from the tire transverse direction outer side toward the inner side of the inner side intermediate land portion 26, but is not limited to this. For example, the width W111 may be constant. The same holds as well for the width W112 in the tire circumferential direction of the chamfered portion 112, the width W121 in the tire circumferential direction of the chamfered portion 121, and the width W122 in the tire circumferential direction of the chamfered portion 122.

The chamfered amount of the chamfered portion 111 that is positioned at the corner portion at the acute angle side is made to be larger than that of the chamfered portion 112 that is positioned at the corner portion at the obtuse angle side, but the magnitudes of the chamfered amounts are not limited to this. The same holds for the chamfered portions 121, 122 as well.

In a tire circumferential direction cross-section, the chamfered portion 111 is made to be a curved shaped that is convex, but is not limited to this, and may be rectilinear for example. The same holds for the chamfered portions 112, 121, 122 as well.

In the tire radial direction, the depth D of the chamfered portion 111 from the tread surface 34 is 10 to 40% of the depth DS of the sipe S from the tread surface 34, but the range of the depth D is not limited to this.

### (Experimental Example)

An experiment was carried out relating to handling stability in cases in which the depths of the chamfered portions of sipes at tires were varied. The depth of the sipe is constant. The tire size, the rim width and the tire internal pressure are the following conditions and are all shared in common. The tread pattern of the tires relating to the Examples is the tread pattern that is illustrated in the drawings. For the tire relating to the Conventional Example, a tire in which there were no chamfered portions at the land portion ends formed by the sipes was used.

In the evaluation, the following tires were mounted onto a front wheel drive vehicle of a 2000 cc displacement, and were made to run on a road for the evaluation of handling stability (a dry, usual road) of a test course in a state in which one person was riding therein, and the handling stability was indexed on the basis of sense-based evaluation (evaluation by feeling) of the test driver.

| | |
|---|---|
| tire size: | 225/45R17 |
| rim width: | 7.5 J |
| internal pressure: | 220 kPa |

The experimental conditions and results of the experiment are as shown in Table 1. The results of evaluation are respectively shown by indices with the evaluation of the Conventional Example being 100, and, the greater the value, the better the results. From these results, it can be understood that the handling stability is better in Examples 1 through 3 than in the Conventional Example and the respective Reference Examples.

**[Table 1]**

| | Conventional Example | Reference Example 1 | Example 1 | Example 2 | Example 3 | Reference Example 2 |
|---|---|---|---|---|---|---|
| ratio (%) of depth of chamfered portion with respect to depth of sipe | - | 5 | 10 | 25 | 40 | 45 |
| handling stability | 100 | 104 | 112 | 120 | 115 | 107 |

## Claims

1. A tire (10) comprising, at a tread:
a plurality of main grooves (14, 16, 18, 20) that extend in a tire circumferential direction (C);
land portions (22, 24, 26, 28, 30) that are demarcated in a tire transverse direction (W) by the main grooves (14, 16, 18, 20);
sipes (S) that communicate with a tread surface (34) side of the land portions (22, 24, 26, 28, 30), and that have two arc-shaped sipe portions (S1, S2) whose convex directions as seen from a tread surface (34) are directions opposite to one another in the tire circumferential direction (C), whose convex directions are directed toward a tire transverse direction central side of the land portion (22, 24, 26, 28, 30), and that communicate with the main grooves (14, 16, 18, 20); **characterised in that**:
chamfered portions (111, 112, 121, 122) of the land portion ends that are at the tread surface (34) side and that run along the sipes (S) are provided.

2. The tire (10) of Claim 1, wherein a width in the tire circumferential direction (C) of the chamfered portions (111, 112, 121, 122) gradually decreases from a tire transverse direction outer side toward an inner side of the land portions (26).

3. The tire (10) of Claim 1 or Claim 2, wherein, at the chamfered portions (111, 112, 121, 122), as seen from the tread surface (34), a chamfered amount of a corner portion at an acute angle side, at which the sipes (S) and the main grooves (18, 20) intersect at an acute angle, is greater than a chamfered amount at a corner portion at an obtuse angle side, at which the sipes (S) and the main grooves (18, 20) intersect at an obtuse angle.

4. The tire (10) of any one of Claim 1 through Claim 3, wherein, in a tire circumferential direction cross-section, the chamfered portions (111, 112, 121, 122) are formed in a curved shape that is convex.

5. The tire (10) of any one of Claim 1 through Claim 4, wherein, in a tire radial direction, a depth (D) of the chamfered portions (111, 112, 121, 122) from the tread surface (34) is 10 to 40% of a depth (DS) of the sipes (S) from the tread surface (34).

## Patentansprüche

1. Reifen (10), der, an einer Lauffläche, Folgendes umfasst:
mehrere Hauptrillen (14, 16, 18, 20), die sich in einer Reifenumfangsrichtung (C) erstrecken,
Stegabschnitte (22, 24, 26, 28, 30), die in einer Reifenquerrichtung (W) durch die Hauptrillen (14, 16, 18, 20) abgegrenzt werden,
Lamellen (S), die mit einer Seite der Lauffläche (34) der Stegabschnitte (22, 24, 26, 28, 30) in Verbindung stehen und die zwei bogenförmige Lamellenabschnitte (S1, S2) aufweisen, deren konvexe Richtungen, gesehen von einer Lauffläche (34) aus, zueinander in der Reifenumfangsrichtung (C) entgegengesetzt sind, deren konvexe Richtungen zu einer in Reifenquerrichtung mittigen Seite des Stegabschnitts (22, 24, 26, 28, 30) hin gerichtet sind und die mit den Hauptrillen (14, 16, 18, 20) in Verbindung stehen, **dadurch gekennzeichnet, dass**:
abgeschrägte Abschnitte (111, 112, 121, 122) der Stegabschnittenden, die sich an der Seite der Lauffläche (34) befinden und die entlang der Lamellen (S) verlaufen, bereitgestellt werden.

2. Reifen (10) nach Anspruch 1, wobei eine Breite der abgeschrägten Abschnitte (111, 112, 121, 122) in der Reifenumfangsrichtung (C) allmählich von einer in Reifenquerrichtung äußeren Seite zu einer inneren Seite der Stegabschnitte (26) hin abnimmt.

3. Reifen (10) nach Anspruch 1 oder Anspruch 2, wobei, an den abgeschrägten Abschnitten (111, 112, 121, 122), gesehen von der Lauffläche (34) aus, ein abgeschrägtes Maß eines Eckabschnitts an einer spitzwinkligen Seite, an der sich die Lamellen (S) und die Hauptrillen (18, 20) in einem spitzen Winkel schneiden, größer ist als ein abgeschrägtes Maß eines Eckabschnitts an einer stumpfwinkligen Seite, an der sich die Lamellen (S) und die Hauptrillen (18, 20) in einem stumpfen Winkel schneiden.

4. Reifen (10) nach einem der Ansprüche 1 bis 3, wobei, in einem Querschnitt in Reifenumfangsrichtung, die abgeschrägten Abschnitte (111, 112, 121, 122) in einer gekrümmten Gestalt geformt sind, die konvex ist.

5. Reifen (10) nach einem der Ansprüche 1 bis 4, wobei, in einer Reifenradialrichtung, eine Tiefe (D) der abgeschrägten Abschnitte (111, 112, 121, 122) von der Lauffläche (34) aus 10 % bis 40 % einer Tiefe (DS) der Lamellen (S) von der Lauffläche (34) aus beträgt.

## Revendications

1. Bandage pneumatique (10), comprenant au niveau d'une bande de roulement :
plusieurs rainures principales (14, 16, 18, 20) s'étendant dans une direction circonférentielle du bandage pneumatique (C) ;
des parties d'appui (22, 24, 26, 28, 30) démarquées dans une direction transversale du bandage pneumatique (W) par les rainures principales (14, 16, 18, 20) ;
des lamelles (S) communiquant avec un côté de la surface de bande de roulement (34) des parties d'appui (22, 24, 26, 28, 30) et comportant deux parties de lamelle en forme d'arc (S1, S2), dont les directions convexes, vues à partir d'une surface de bande de roulement (34) sont des directions opposées l'une à l'autre dans la direction circonférentielle du bandage pneumatique (C), dont les directions convexes sont dirigées vers un côté central, dans la direction transversale du bandage pneumatique, de la partie d'appui (22, 24, 26, 28, 30), et communiquant avec les rainures principales (14, 16, 18, 20), **caractérisé en ce que** :
des parties chanfreinées (111, 112, 121, 122) des extrémités des parties d'appui, agencées sur le côté de la surface de bande de roulement (34) et s'étendant le long des lamelles (S) sont fournies.

2. Bandage pneumatique (10) selon la revendication 1, dans lequel une largeur, dans la direction circonférentielle du bandage pneumatique (C), des parties chanfreinées (111, 112, 121, 122) est progressivement réduite, d'un côté externe, dans la direction transversale du bandage pneumatique, vers un côté interne des parties d'appui (26).

3. Bandage pneumatique (10) selon la revendication 1 ou la revendication 2, dans lequel, au niveau des parties chanfreinées (111, 112, 121, 122), vues à partir de la surface de bande de roulement (34), une valeur du chanfrein d'une partie de coin au niveau d'un côté à angle aigu, où les lamelles (S) et les rainures principales (18, 20) se coupent à un angle aigu, est supérieure à une valeur du chanfrein au niveau d'une partie de coin sur un côté à angle obtus, où les lamelles (S) et les rainures principales (18, 20) se coupent à un angle obtus.

4. Bandage pneumatique (10) selon l'une quelconque des revendications 1 à 3, dans lequel, dans une section transversale dans la direction circonférentielle du bandage pneumatique, les parties chanfreinées (111, 112, 121, 122) sont formées en une forme courbée convexe.

5. Bandage pneumatique (10) selon l'une quelconque des revendications 1 à 4, dans lequel, dans une direction radiale du bandage pneumatique, une profondeur (D) des parties chanfreinées (111, 112, 121, 122) à partir de la surface de bande de roulement (34) représente 10 à 40% d'une profondeur (DS) des lamelles (S) à partir de la surface de bande de roulement (34).
